(19)

Europäisches Patentamt

European Patent Office

Office européen des brevets

(11) **EP 4 475 037 A2**

(12) **EUROPEAN PATENT APPLICATION**

(43) Date of publication:
**11.12.2024 Bulletin 2024/50**

(21) Application number: **24207066.2**

(22) Date of filing: **01.10.2021**

(51) International Patent Classification (IPC):
***G06N 3/045*** *(2023.01)*

(52) Cooperative Patent Classification (CPC):
**G06N 3/045; G06N 3/092; G06N 3/096**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2020 US 202063087123 P**

(62) Document number(s) of the earlier application(s) in accordance with Art. 76 EPC:
**21786473.5 / 4 205 033**

(71) Applicant: **DeepMind Technologies Limited London EC4A 3TW (GB)**

(72) Inventors:
• **HUANG, Sandy Han London, N1C 4AG (GB)**

• **ABDOLMALEKI, Abbas London, N1C 4AG (GB)**

(74) Representative: **Marks & Clerk GST 1 New York Street Manchester M1 4HD (GB)**

Remarks:
•This application was filed on 16-10-24 as a divisional application to the application mentioned under INID code 62.
•Claims filed after the date of filing of the application / after the date of receipt of the divisional application (Rule 68(4) EPC).

(54) **CONSTRAINED REINFORCEMENT LEARNING NEURAL NETWORK SYSTEMS USING PARETO FRONT OPTIMIZATION**

(57)    A system and method that controls an agent to perform a task subject to one or more constraints. The system trains a preference neural network that learns which preferences produce constraint-satisfying action selection policies. Thus the system optimizes a hierarchical policy that is a product of a preference policy and a preference-conditioned action selection policy. Thus the system learns to jointly optimize a set of objectives relating to rewards and costs received during the task whilst also learning preferences, i.e. trade-offs between the rewards and costs, that are most likely to produce policies that satisfy the constraints.

FIG. 1

EP 4 475 037 A2

## Description

BACKGROUND

This specification relates to controlling agents using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

Hasan et al., "Dynamic multi-objective optimisation using deep reinforcement learning: benchmark, algorithm and an application to identify vulnerable zones based on water quality", Engineering Applications of Artificial Intelligence, Pineridge Press, Swansea, GB, vol. 86, 6 September 2019, pages 107-135, describes an algorithm for multi-objective optimization in which an ORM (Objective Relation Mapping) module balances Q values from DQN networks to achieve possible optimal Q values for different objectives by averaging them or multiplying with preference values.

SUMMARY

This specification describes a system and method implemented as computer programs on one or more computers in one or more locations that controls an agent to perform a task subject to one or more constraints.

This is achieved by training a preference neural network that learns which preferences produce constraint-satisfying action selection policies. More particularly the system optimizes a hierarchical policy that is a product of a preference policy and a preference-conditioned action selection policy. Thus the system learns to jointly optimize a set of objectives relating to rewards and costs received during the task whilst also learning preferences, i.e. trade-offs between the rewards and costs, that are most likely to produce policies that satisfy the constraints. The invention is set out in claim 1; further aspects are defined in the dependent claims.

Generally, the task is an agent control task. As one example the task may include controlling a mechanical agent to cause the agent to accomplish a goal within a real-world environment. For example the agent may be a robot or an autonomous or semi-autonomous vehicle and the task may include causing the agent to navigate to different locations in the environment, causing the agent to locate different objects, causing one or more parts of the agent to move, causing the agent to manipulate an object e.g. to pick up the object or to move the object to a specified location, and so forth. Examples of constraints include energy expended whilst performing the task, and physical constraints on motion of the agent such as on the force exerted by an actuator during the task or a constraint on a measure of physical wear-and-tear incurred during the task.

The subject matter described in this specification can be implemented in particular embodiments so as to realize one or more of the following advantages.

Some implementations of the described system are able to identify action selection policies which perform better than existing approaches in that they may be able to achieve greater rewards when performing a task and/or are better able to meet the constraint(s). Implementations of the system can also be more sample-efficient than existing techniques, that is they may learn faster, and from less training data, than existing techniques. This in turn can reduce the computing and memory requirements needed to learn a task subject to a constraint. It can also enable the method and system to learn to perform constrained tasks which other approaches only learn poorly or not at all, e.g., when a Pareto front of policies for performing the task is concave.

The described system can learn to perform a task when the reward(s) and cost(s) are conflicting: The more difficult a constraint is to satisfy the more it conflicts with performing the task and obtaining rewards. Some existing approaches inhibit exploration to meet the constraint(s) and thus only reach suboptimal task performance. The described system effectively maintains an ensemble over action selection policies for different preference settings, which reduces the chance of getting stuck in a local optimum and enables better exploration. The system can accommodate various different kinds of constraints depending on the fitness function used, as described later.

The described system is flexible and able to find action selection policies that satisfy a range of constraints. Thus the system can learn a single action selection policy across a distribution of preference settings and simultaneously learn a distribution over preferences that satisfies the constraint(s). This can also help inform a user decision about which particular action selection policy to use.

Implementations of the system are particularly useful for tasks performed by a real-world robot or other mechanical agent as such tasks often require action selection policies that meet particular constraints. Wear and tear, and risk of mechanical failure as a result of repeatedly interacting with the environment, may also be reduced.

Implementations of the described techniques are not restricted to use with any particular reinforcement learning algorithm and can be applied to a range of different reinforcement learning algorithms. The techniques may be used to learn a single task subject to one or multiple constraints, or can be used to learn multiple tasks subject to multiple different constraints.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 shows an example of an action selection system.
FIG. 2 shows details of a particular example of the action selection system.
FIG. 3 is a flow diagram of an example process for training the action selection system.
FIG. 4 is a flow diagram of an example process updating parameters of an action selection policy neural network.

Like reference numbers and designations in the various drawings indicate like elements.

DETAILED DESCRIPTION

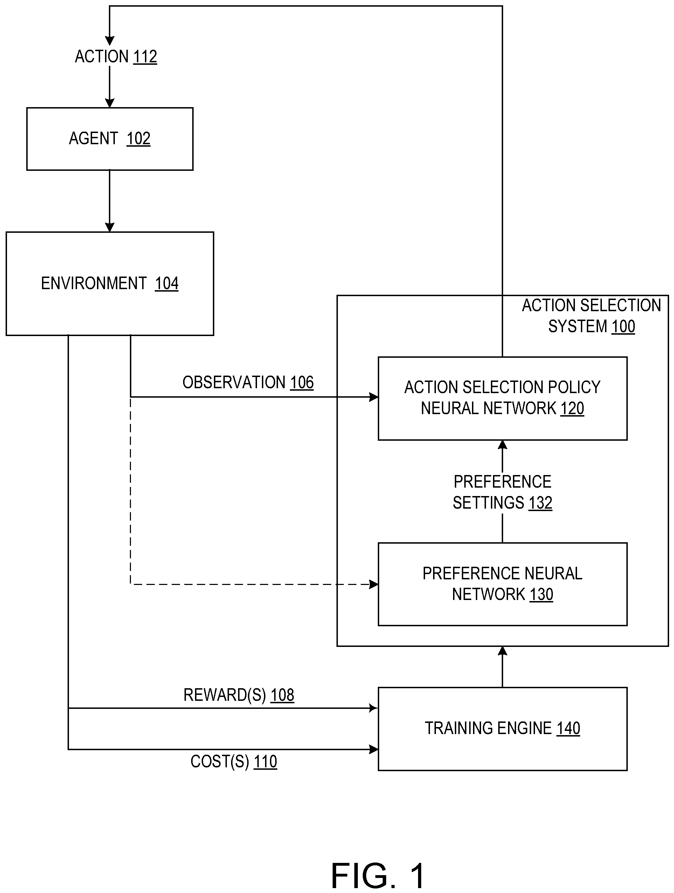

FIG. 1 shows an example of an action selection system 100 which may be implemented as one or more computer programs on one or more computers in one or more locations. The action selection system 100 is used to control an agent interacting with an environment to perform one or more tasks, using reinforcement learning techniques.
The action selection system 100 has one or more inputs to receive data from the environment characterizing a state of the environment, e.g. data from one or more sensors of the environment. Data characterizing a state of the environment is referred to herein as an observation 106.
The data from the environment can also include task rewards. Generally a task reward 108 is represented by a scalar numeric value characterizing progress of the agent towards the task goal and can be based on any event in, or aspect of, the environment. Task rewards may be received as a task progresses or only at the end of a task, e.g. to indicate successful completion of the task.
The data from the environment can also include one or more task costs 110, e.g. an energy cost for performing an action, or a cost incurred by collision of the agent with an object. As used herein a cost is equivalent to a negative reward.
As described further below, the action selection system 100 is configured to perform the one or more tasks subject to one or more constraints on one or more respective costs. A constraint may be a value which provides a threshold or limit within which a cost is to be constrained. In general implementations of the described systems and methods aim to control the agent to maximize the reward(s) whilst maintaining the cost(s) within the constraint(s).
The action selection system 100 also has an output which provides control signals to an agent 102 to control actions of the agent in an environment 104. Generally, when the agent performs an action the environment transitions from a current state to a new state, and by repeatedly causing the agent 102 to act in the environment 104 the action selection system 100 can control the agent 102 to perform the task(s). The agent actions may be discrete actions selected from a set of possible actions, or continuous actions i.e. actions defined by a continuous variable such as motor torque or the like. The action selection system 100 receives observations of the state of the environment, and rewards, and costs, and processes these to provide the control signals to the agent to cause the agent to perform the task(s).
In more detail, the action selection system 100 selects the action 112 to be performed by the agent 102 at each of multiple time steps to perform the task(s). At each time step, the action selection system 100 receives the observation 106, e.g. an image of the environment, and selects the action 112 to be performed by the agent 114 in response to the received observation. At each time step the state of the environment at the time step, as characterized by the observation, depends on the state of the environment at the previous time step and the action performed by the agent at the previous time step. At each time step, the action selection system 100 can receive a reward 108 and/or cost 110 based on the current state of the environment and the action of the agent at the time step. The action selection system 100 is trained using the received rewards and costs.
For example the agent may be a robotic agent interacting with a real-world environment e.g. by moving within the environment or physically manipulating an object in the environment. Then the observation may include observations of the position or state of motion of joints or other parts of the agent, and observations about the position or state of motion of one or more objects in the environment, e.g. as one or more images or sensor data. The action selection system 100 provides a control signal to control the agent to perform the action e.g. to move the agent and/or part of the agent. A reward may represent completion or progress towards completion of a task; a cost may represent e.g. energy expenditure or wear of the agent, or an interaction of the agent with the environment of a type which is to be constrained. After the action is performed a next observation characterizes a subsequent state of the environment, i.e. an effect of the action.

The action selection system 100 comprises an action selection policy neural network 120 with a plurality of action selection policy neural network parameters, for selecting the action 112 in response to the observation 106 in accordance with an action selection policy. The action selection policy neural network is conditioned on, i.e., generates an output dependent upon, a preference vector input comprising a vector of preference settings 132, each preference setting defining a relative priority of one of the rewards or costs with respect to the others i.e. a relative priority of a corresponding set of target objectives.

Each of the one or more rewards 108 and each of the one or more costs 110 has a corresponding target objective. A target objective may relate to or comprise an estimated cumulative measure of the reward or of the cost received as the agent interacts with the environment over multiple time steps e.g. as represented by a respective Q-value. The cumulative measure may be referred to as an expected return. For a reward, the target objective may be to maximize the expected return. For a cost the target objective may similarly be to maximize the expected return for the negative reward i.e. to minimize the estimated cumulative cost.

The action selection system 100 also comprises a preference neural network 130 with a plurality of preference neural network parameters. The preference neural network 130 defines a preference distribution for generating the vector of preference settings 132 e.g. by sampling from the distribution. In some implementations the preference neural network 130 may also be conditioned on the state of the environment i.e. on an observation of the state, as indicated by the dashed line in FIG. 1.

At each time step the action selection system 100 selects the action 112 to be performed by the agent 102 using an output of the action selection policy neural network 120. This may be done in many ways. For example the output may define the action directly, e.g., it may comprise a value used to define a continuous value for an action such as a torque or velocity, or it may define a continuous or categorical distribution from which a value defining the action may be selected, or it may define a set of scores, one for each action of a set of possible actions, for use in selecting the action.

At each time step the action selection policy neural network 120 receives and processes data from the observation 106 and a vector of preference settings 132 that has been sampled from the distribution defined by the output of the preference neural network 130, e.g. sampling the vector of preference settings at the time step. Optionally, the same sampled vector of preference settings may be used in multiple time steps. The output of the action selection policy neural network 120 is used to select the action to be performed by the agent and receiving one or more rewards and one or more costs. The one or more rewards are received from the environment in response to the action. The one or more costs may be received from the environment or may be determined based on the action e.g. from a negative L2-norm of a vector defining the action, which may be considered an approximation to energy expenditure. At some, potentially many, time steps the rewards or costs may be zero or null.

The action selection system 100 includes a training engine 140 that is configured to train the system. Training the system comprises fixing the preference neural network parameters and adjusting the action selection policy neural network parameters, in particular to jointly optimize the set of target objectives according to the preferences (priorities) defined by the vector of preference settings. The training further comprises fixing the action selection policy neural network parameters and adjusting the preference neural network parameters to optimize a constraint objective dependent on whether each of the one or more constraints is satisfied by the one or more respective costs. In implementations the constraint objective represents a degree to which the one or more constraints are satisfied and may be defined by one or more fitness values.

Thus implementations of the system jointly optimize the set of target objectives to bring the action selection system 100, in particular the action selection policy neural network 120, towards an optimal action selection policy based on the relative priorities of the target objectives defined by the vector of preference settings. These preferences are then adapted based on to the constraint(s) with the current action selection policy fixed. The system can thus alternate between improving the action selection policy and improving a target objective preference policy, iteratively converging on an action selection policy which is both optimal and satisfies the constraints.

In some implementations the training steps alternate, taking one step to train the action selection policy neural network 120 then one to train the preference neural network 130, but in general the training time scales may be different. For example the action selection policy neural network 120 may be trained until some optimality condition is met based on an initial preference distribution; and then the preference neural network 130 may be trained until an optimality condition for the preference distribution is met. In general there are multiple action selection time steps for each training step.

Any multi-objective reinforcement learning process capable of training a preference conditioned action selection policy may be used for training the action selection policy neural network 120. Similarly any single- or multi-objective reinforcement learning process may be used to train the preference neural network 130. Where a single-objective reinforcement learning process is used and multiple constraints are present, e.g. defined by multiple respective fitness values, the constraints may be combined, e.g. the fitness values may be summed to obtain a combined fitness value.

Implementations of the system are based on the recognition that a constraint-satisfying optimal action selection policy is Pareto optimal. A Pareto front may be defined by a set of Pareto optimal policies. A Pareto optimal policy may be defined as an action selection policy for which the return from one target objective of the action selection policy cannot be improved without reducing the return, e.g., increasing the cost (negative return), from another target objective. With unconstrained multi-objective reinforcement learning there is no single optimal policy, but a set defining the Pareto front.

Counter-intuitively, rather than directly trying to optimize subject to a constraint objective, implementations of the system use multi-objective reinforcement learning learn the Pareto front, and as a separate problem, to be solved sequentially or simultaneously, identify part of the Pareto front that is likely to meet the constraint(s). This is based on the recognition that the optimal constraint-satisfying action selection policy lies on the Pareto front (as if not there would be another constraint-satisfying policy with higher returns, contradicting the Pareto front definition). Thus implementations of the system, in effect, search along the Pareto front to find a constraint-satisfying action selection policy that maximizes the return.

Thus an effect of the training is that the action selection policy neural network parameters are adjusted so that the set of target objectives is optimized towards the Pareto front, and the preference neural network parameters are adjusted so that the set of target objectives is optimized towards a region of the Pareto front in which the constraints are satisfied, i.e. a region defined by the preference distribution.

In implementations the constraint objective is defined by determining a value of a respective constraint fitting function for each of the one or more constraints. The value of the constraint fitting function for a constraint objective is also referred to herein as a fitness value. The fitness value depends on the vector of preference settings and evaluates whether the respective constraint is satisfied by the respective cost (given the current action selection policy neural network parameters).

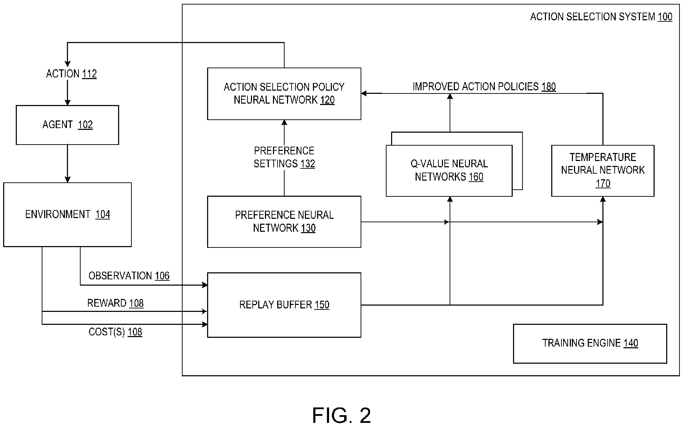

FIG. 2 shows details of a particular example of the action selection system 100. This system is configured to implement a multi-objective reinforcement learning process for training a preference-conditioned action selection policy implemented by the action selection policy neural network 120.

The action selection system 100 of FIG. 2 maintains a replay buffer 150 that stores transitions, i.e. observation-action-reward trajectories, generated as a result of the agent interacting with the environment at each time step. Each transition comprises a tuple defining a current observation, an action performed by the agent in response to the observation, a next observation characterizing a next state of the environment, the reward(s) received in response to the agent performing the current action, and the corresponding cost(s). However in some other implementations learning may be performed online and the replay buffer may be omitted.

The system also maintains a set of Q-value neural networks 160, one for each target objective i.e. one for each of the one or more rewards 108 and one for each of the one or more costs 110. In practice the Q-value neural networks 160 may be implemented as a common neural network torso with multiple heads. Each Q-value neural network has a plurality of Q-value neural network parameters and is configured to process an input comprising upon an action, an observation, and a vector of preference settings to generate a Q-value output for defining an action-value score for the action. The Q-value output may directly define the action-value score or it may parameterize a distribution, e.g., a Gaussian distribution e.g. with a diagonal covariance matrix, from which the action-value score may be drawn.

The Q-value neural networks may be trained using the transitions in the replay buffer 150. In implementations the vector of preference settings is not stored in the replay buffer and a value for this vector is added to each transition. This may be done by, for each transition, sampling from the preference distribution defined by the output of the preference neural network 130 using the current preference neural network parameters. Such hindsight re-labelling of stored transitions can help stabilize the training and improve sample efficiency.

The Q-value neural networks may be trained using any Q-learning technique. For example with a distributional Q-value and $N$-step, e.g. 5-step, returns the approach described in arXiv:1804.08617 (D4PG) may be used. In general two versions of the Q-value neural networks are maintained, a current version with a current set of parameters and a target version with a previous set of parameters and the Q-value neural networks are trained based on a temporal difference error calculated using the target version. Periodically the previous set of parameters is replaced by the current set of parameters.

In implementations the system is configured to determine the fitness value of the constraint fitting function for a constraint, from the Q-value output of the Q-value neural network corresponding to the target objective of the cost constrained by the constraint. The Q-value output is dependent on the vector of preference settings. In some implementations this may be obtained by from the preference distribution defined by the output of the preference neural network 130, e.g. at the start of a task episode during which the agent attempts to perform the task (and the fitness value is an expectation over states). In some other implementations the preference neural network 130 is conditioned on the state of the environment i.e. on the observation, and the vector of preference settings may then be sampled at each time step.

As previously mentioned the constraint objective represents a degree to which the one or more constraints are satisfied and may be defined by, i.e. determined using, one or more fitness values. Any single- or multi-objective reinforcement learning process may be used to train the preference neural network 130 to optimize, e.g. maximize, the one or more fitness values. For example where the constraint objective comprises a set of objectives, one for each constraint, a multi-objective reinforcement learning technique may be used, e.g., MO-MPO (arXiv:2005.07513). Optionally the preference neural network parameters may be adjusted subject to a trust region i.e. a bound on the degree to which the preference distribution can change.

In a particular example a value of a constraint fitting function, or fitness function $f_k^{eq}$ , for an equality constraint $c_k$ on the kth cost is determined by evaluating:

$$-\left| Q_k^{old}\left(s, \mathbb{E}_{\pi_{old}(a|s,\epsilon)}[a], \epsilon\right) - c_k \right|$$

where $\varepsilon$ is a vector of preferences, s is a state (i.e. observation) in a transition sampled from the replay buffer 150, $Q_k^{old}\left(s, \mathbb{E}_{\pi_{old}(a|s,\epsilon)}[a], \epsilon\right)$ is a Q-value defined by the Q-value neural network for the kth cost. $\mathbb{E}_{\pi_{old}(a|s,\epsilon)}[a]$ denotes an expectation taken over actions selected by the action selection policy neural network 120. In practice the expectation $\mathbb{E}_{\pi_{old}(a|s,\epsilon)}[a]$ may be evaluated by sampling M, e.g. 20, actions for state s using the action selection policy neural network 120 i.e. according to $\pi_{old}(a|s, \varepsilon)$. A new vector of preferences may be sampled for each action a. The fitness function $f_k^{eq}$ may be evaluated stochastically from one or more states s sampled from the replay buffer i.e. it may be averaged over observations and actions. The equality fitness function $f_k^{eq}$ is negative so that the further the kth cost is from $c_k$, the lower the value of the equality fitness function. Thus this fitness function has a maximum value when the cost (target objective) is equal to the constraint value.

Here, and in general in this specification, the superscript or subscript *old* denotes current values of a set of neural network parameters. Later *new* denotes new values of a set of neural network parameters obtained by updating the *old* set. $Q_k^{old}$ may refer either to the current, trained Q-value neural network parameters that evaluates πold(a|s, ε) or to the "previous set of parameters" used during training the Q-value neural network.

In another particular example a value of constraint fitting function, or fitness function $f_k^{ineq}$ , for an inequality constraint $c_k$ on the kth cost is determined by evaluating:

$$\min\left(0, Q_k^{old}\left(s, \mathbb{E}_{\pi_{old}(a|s,\epsilon)}[a], \epsilon\right) - c_k\right)$$

where again the $f_k^{ineq}$ may be evaluated stochastically from one or more states s, i.e. observations, sampled from the replay buffer. This inequality constraint penalizes an amount the Q-value falls under a threshold defined by $c_k$ i.e. it defines a value that becomes more negative the further the Q-value is from the threshold. The constraint $c_k$ can be expressed as a lower bound without loss of generality.

Other types of fitness function can be used for other types of constraint. For example where the preference neural network processes data from an observation, and hence the preference distribution is observation-dependent, a constraint may be dependent upon an observation, i.e. upon a state of the environment at a time step. In general a constraint objective may be obtained by integrating a constraint fitting function dependent on the vector of preference settings over the preference distribution defined by the preference neural network.

A Q-value may be defined as a value, or expected return, for taking an action in a state characterized by an observation, and thereafter acting according to the action selection policy defined by the current values of the action selection policy neural network parameters. The Q-values described above are also dependent on the vector of preference settings. As described above, in implementations of the system the value of the constraint fitting function, i.e. the fitness value, depends on a difference between the Q-value output of the Q-value neural network for the target objective of the cost constrained by the constraint, and a constraint value for the constraint.

In implementations a constraint value may be defined based on an expected per-episode cost. Also or instead, e.g. where a true constraint is not precisely known, average per-episode task reward may be plotted against average per-episode cumulative cost for a range of different constraint values to choose an action selection policy.

The action selection system 100 is configured to sample a vector of preference settings from the preference distribution defined by the preference neural network 130 whilst the preference neural network parameters are fixed. During training the action selection policy neural network parameters are adjusted to jointly optimize the set of target objectives according to relative preferences amongst these defined by the relative priorities of the corresponding rewards or constraints, as set by the sampled vector of preference settings.

FIG. 2 illustrates an example implementation of an action selection system 100 configured for training a preference conditioned action selection policy using multi-objective reinforcement learning. The system of FIG. 2 is configured to implement a two-step process that involves a policy evaluation step and a policy improvement step. In the example the policy evaluation step involves training a separate Q-function per target objective to evaluate the current action selection policy defined by $\pi_{old}(\varepsilon)$ and $\pi_{old}(a|s, \varepsilon)$. The policy improvement step involves finding, for each target objective, an improved action selection policy 180, and then distilling these policies into a new preference-conditioned action selection policy using supervised learning.

In implementations finding an improved action selection distribution for an objective involves maintaining a temperature function for the objective, conditioned on the vector of preference settings. Thus the system maintains one or more temperature neural networks 170 conditioned on the vector of preference settings. In implementations a single temperature neural network 170 is maintained, conditioned on the vector of preference settings, with shared parameters for all the target objectives.

The action selection system 100 of FIG. 2 allows the entire Pareto front to be represented by a common action selection policy, and thus facilitates the action selection policy converging on a region of the Pareto front that satisfies the constraints.

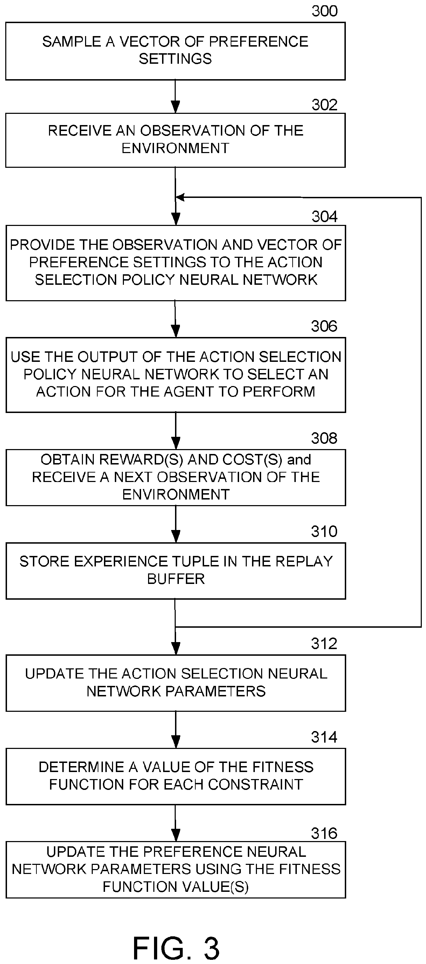

FIG. 3 is a flow diagram of an example process for training the action selection system 100 of FIG. 1 to control an agent to perform a task subject to one or more constraints on one or more respective costs.

In some implementations the action selection system 100 samples a vector of preference settings from the preference distribution defined by the preference neural network (300) that is used for each of multiple time steps. The system then receives an observation from the environment for a current time step (302) and the observation and the vector of preference settings are then provided the action selection policy neural network (304). An output of the action selection policy neural network is used to select the action to be performed by the agent, in response obtaining one or more rewards and one or more costs (308). In some implementations the costs may be partly or wholly determined internally by the action selection system, e.g. from the selected action, rather than being obtained from the environment. The action selection system also obtained a next observation characterizing a next state of the environment after the action has been performed (308). Then an experience tuple is stored in the replay buffer 150 as previously described (310).

These steps are performed for each of multiple time steps to collect experience for training the action selection system. For example the steps may be performed for a task episode during which the agent attempts to perform the task. In some implementations multiple actor systems each obtain a copy of the parameters of the action selection system at intervals and each controls a respective agent (asynchronously) to generate transitions that are stored in the replay buffer.

The process then updates the action selection policy neural network parameters to jointly optimize the set of target objectives (312) given the current preference distribution, i.e. the relative priorities of the target objectives, defined by the preference neural network 130. In some implementations, as described below, the process determines an improved, preference-conditioned action selection distribution for each objective by maximizing a Q-value for the objective, and then combines these to update the action selection policy neural network parameters to obtain an improved action selection policy.

Then a value of the fitness function (constraint fitting function) for each constraint is determined (314). In implementations determining the value of a fitness function involves sampling states from the replay buffer 150, and for each of these sampling a set of actions from the action selection neural network, according to the current action selection policy, and for each state-action combination sampling a vector of preference settings from the current preference distribution. The fitness functions may then be evaluated as previously described. Other approaches to the sampling may be used.

The process then uses the values of the fitness functions to update the parameters of the preference neural network, using any reinforcement learning technique (316), to maximize the fitness function values.

The training processes of steps 312 and 314-316 may be performed in either order. The steps of FIG. 3 may be repeated e.g. for a fixed number of iterations or until the system learns to perform the task satisfactorily whilst meeting the constraint(s).

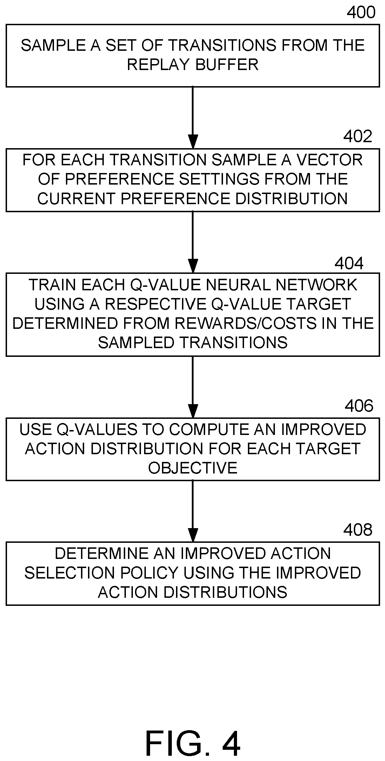

FIG. 4 is a flow diagram of an example process for updating the action selection policy neural network parameters to jointly optimize the set of target objectives. This process has two main steps, a policy evaluation step and a policy improvement step. The policy evaluation step involves maintaining a separate Q-value neural network for each target objective. The policy improvement step involves using the Q-value neural networks for each target objective to improve the preference-conditioned action selection policy defined by the action selection policy neural network.

The process samples a set of transitions from replay buffer 150 (400). The Q-value neural network for a target objective $k$ generates a Q-value $Q_k(s, a, \varepsilon)$ that is conditioned on the vector of preference settings. Thus each transition is augmented with a vector of preference settings sampled from the current preference distribution defined by the preference neural network 130 (402). Each transition $i$ thus comprises an observation or state $s_i$, a vector of preference settings $\varepsilon_i$, an action $a_i$, a set of rewards/costs $r_i^k$ (where a cost is a negative reward), and a next observation or state $s_i'$. In an example implementation there are $(K + 1)$ rewards/costs, a reward $r_0$ and $K$ constrained rewards (costs), and thus there are also $(K + 1)$ Q-value neural networks.

The process trains the $(K + 1)$ Q-value neural networks 160 using the sampled transitions, more specifically training the $k$th Q-value neural network using the $k$th reward/cost $r_i^k$ in the sampled transitions (404). In implementations the training involves adjusting the Q-value neural network parameters of each Q-value neural network to optimize a Q-learning objective dependent upon a measure of a difference between the Q-value output of the Q-value neural network and a respective Q-value target. In some implementations the Q-value neural networks may each define a distribution over returns. The Q-value target may be defined by a version of the Q-value neural network with a previous i.e. earlier set of parameters, to stabilize learning. The respective Q-value target may be determined in accordance with, i.e. using actions selected by, an action selection policy defined by a current value of the action selection policy neural network parameters. That is the Q-value neural networks may generate Q-values $Q_k^{old}(s, a, \boldsymbol{\epsilon})$ that evaluate the current preference-conditioned action selection policy $\pi_{old}(a|s, \varepsilon)$. Then the action selection policy neural network parameters may be adjusted using the Q-value output of each Q-value neural network, as described further below.

In implementations the policy improvement step first involves using the Q-value output of each Q-value neural network to optimize the respective target objective, in particular by computing an improved action distribution $q_k(a|s, \varepsilon)$ for each target objective i.e. an action distribution that improves the Q-values for the target objective (406). This may be referred to as an improved action selection policy for the target objective, and is conditioned on the observations (states) $s$, and on a vector of preference settings $\varepsilon$ from the current preference distribution.

Computing the improved action distribution $q_k(a|s, \varepsilon)$ for a target objective may involve scaling the output of the current action selection policy neural network $\pi_{old}(a|s, \varepsilon)$ by a policy improvement factor for the target objective dependent upon the Q-value output from the Q-value neural network for the target objective, $Q_k^{old}(s, a, \boldsymbol{\epsilon})$.

The policy improvement factor may be viewed as a weight on the action probabilities. In implementations the policy improvement factor for the target objective is dependent upon a preference-dependent temperature parameter generated by the temperature neural network 170. For example the temperature neural network 170 may generate an output $\eta(\varepsilon)$ and the kth component of this output, denoted $\eta(\varepsilon_k)$, may be used for as the temperature parameter for the kth target objective.

In implementations the policy improvement factor comprises an exponential factor of a ratio of the Q-value output for the target objective $Q_k^{old}(s, a, \boldsymbol{\epsilon})$, and the temperature parameter $\eta(\varepsilon_k)$. The temperature parameter may be viewed as controlling a diversity of the actions contributing to the policy improvement factor; merely by way of illustration in some implementations it may have a value of order 1-10. For example in some implementations the improved action distribution is determined according to:

$$q_k(a|s, \boldsymbol{\epsilon}) \propto \pi_{old}(a|s, \boldsymbol{\epsilon}) \exp\left(\frac{Q_k^{old}(s, a, \boldsymbol{\epsilon})}{\eta(\boldsymbol{\epsilon}_k)}\right)$$

This constrains an expectation over states of a KL divergence between $q_k(a|s, \varepsilon)$ and $\pi_{old}(a|s, \varepsilon)$ to be less than the kth component of the vector of preference settings, $\varepsilon_k$.

A value for each temperature parameter $\eta(\varepsilon_k)$ is generated by the temperature neural network 170. In some implementations a separate neural network may be maintained to generate the preference-dependent temperature parameter for each target objective. The temperature parameter may be obtained by optimizing, e.g. minimizing, a temperature objective function of temperature neural network 170.

In implementations the temperature objective function is dependent upon, for each target objective, the Q-value output from the Q-value neural network for the target objective $Q_k^{old}(s, a, \epsilon)$, averaged over preference settings sampled from the preference distribution, observations received from the environment, and actions for the observations sampled from the current action selection policy. The averaging may be performed by drawing samples from the replay buffer 150.

In one particular example the process samples $L$, e.g. 20, observations (states) from the replay buffer 150, and for each observation $s^i$ samples i) a vector of preference settings $\epsilon^i$ from the preference distribution defined by the current values of preference neural network parameters $\pi_{old}(\varepsilon)$, and ii) a set of $M$ actions $a^{ij}$ from the current action selection policy $\pi_{old}(a|s^i, \epsilon^i)$ conditioned on the sampled vector of preference settings. The process then determines a Q-value $Q_k^{ij} = Q_k^{old}(s^i, a^{ij}, \epsilon^i)$ for each target objective $k$, conditioned on the sampled vector of preference settings, for each of the actions. The process may then determine an update $\delta_\omega$ for parameters $\omega$ of the temperature neural network 170 in accordance with an example temperature objective function as:

$$\delta_\omega \leftarrow -\nabla_\omega \sum_k \frac{1}{L} \sum_i^L \eta_\omega(\epsilon^i)[k] \, [\epsilon_k^i + \log \sum_j^M \frac{1}{M} \exp\left(\frac{Q_k^{ij}}{\eta_\omega(\epsilon^i)[k]}\right)]$$

where [k] indexes a component of the temperature parameter output from the temperature neural network 170 (with the dependency on $\omega$ shown explicitly).

The process updates the current parameters $\omega$ of the temperature neural network by performing one or more gradient descent steps based on $\delta_\omega$ using any gradient-based optimizer. The parameters of the temperature neural network may be updated before or after determining the improved action distributions.

A policy improvement step is then performed using the improved action distributions (408). In broad terms the improved action distributions are distilled into a new preference-conditioned action selection policy by updating the action selection policy neural network parameters. More specifically the action selection policy neural network parameters are adjusted to optimize a combined policy improvement objective dependent upon a measure of a difference between a current action selection policy defined by the current parameters of the action selection policy neural network and the improved action policy (improved action distribution) for each target objective.

In implementations the current action selection policy, and the improved action policy for each target objective, each define a distribution over actions dependent upon the observations and upon the preference settings. Thus each measure of the difference between a distribution of the current action selection policy and one of the improved action distributions may be a measure of the difference between two distributions, e.g. a KL (Kullback-Leibler) divergence or other measure. The measure of the difference may be averaged over the preference distribution and/or over state visitation, e.g. over observations sampled from the replay buffer. The action selection policy neural network parameters may be adjusted subject to a trust region bound that constrains the difference between the two distributions.

Continuing the previous particular example, the process may determine an update $\delta_\theta$ for the current parameters $\theta$ of the action selection neural network 120, in accordance with an example combined policy improvement objective based on KL-divergence, as:

$$\delta_\theta \leftarrow -\nabla_\theta \sum_i^L \sum_j^M \sum_{k=0}^K q_k^{ij} \log \pi_{old}(a^{ij}|s^i, \epsilon^i)$$

where $q_k^{ij}(a|s, \epsilon) \propto \exp\left(\frac{Q_k^{ij}}{\eta_\omega(\epsilon^i)[k]}\right)$. The parameters $\theta$ of the action selection neural network 120 may then be updated by performing one or more gradient descent steps based on $\delta_\theta$ using any gradient-based optimizer.

In some implementations the update is subject to a trust region bound that constrains a difference between an action distribution defined by the current action selection policy neural network and an action distribution defined by the updated action selection policy neural network, to help stabilize learning. For example the update may be subject to $KL(\pi_{old}(a|s, \varepsilon)|\pi(a|s, \varepsilon)) < \beta$, where $\beta > 0$, e.g. $\beta = 10^{-3}$ or less. An update subject to such a condition may be implemented using a Lagrangian multiplier method e.g. as described in arXiv: 2005.07513.

As previously described, any reinforcement learning process may be used to update the parameters, $\psi$, of the

preference neural network to maximize, the one or more fitness values. In one particular implementation an MO-MPO (Multi-Objective Maximum a Posteriori Policy Optimization) technique is used, e.g. as described in arXiv: 2005.07513.

This may involve maintaining, for each of the $K$ fitness functions, a respective fitness function temperature variable $\phi_k$ and preference distribution KL bound, $\alpha_k$ where, e.g. $\alpha_k$ = 0.1 for each of the fitness functions. In one example implementation for each fitness function $k = 1,.., K$, M samples of the vector of preference settings $\epsilon^i$ are drawn from the preference distribution defined by the current values of preference neural network parameters $\pi_{old}(\varepsilon)$, an update $\delta_{\phi_k}$ to $\phi_k$ for fitness function $f_k$ may be determined as:

$$\delta_{\phi_k} \leftarrow \nabla_{\phi_k} \phi_k \alpha_k + \phi_k \log\left(\sum_i \frac{1}{M} \exp\left(\frac{f_k^i}{\phi_k}\right)\right)$$

The current value of each fitness function temperature variable $\phi_k$ may then be updated by performing one or a few steps of gradient descent based on $\delta\phi_k$ using any convenient optimizer. The process may then determine values $p_k^i \propto \exp\left(\frac{f_k^i}{\phi_k}\right)$, and determine an update $\delta_\psi$ to the parameters, $\psi$, of the preference neural network as:

$$\delta_\psi \leftarrow -\nabla_\psi \sum_i^M \sum_{k=1}^K p_k^i \log \pi_\psi(\epsilon^i)$$

In some implementations the update is subject to an additional KL bound that constrains a difference between the updated and current preference distributions, e.g. similar to that described above for the action selection policy.

Implementations of the method constrain the actions of the agent after the system has been trained i.e. during deployment. The actions may be to a degree constrained whilst the action selection policy neural network is being trained by initializing the preference distribution such that a sampled vector of preference settings sampled from the preference distribution is likely to prioritize minimizing the cost(s) over maximizing the reward(s). In another example the preference policy may be initialized to a uniform distribution over e.g. 100 discrete linearly spaced values between $10^{-5}$ and 0.15; or a default value of $\varepsilon_k$ = 0.1 may be used.

In some implementations, rather than using a replay buffer the system may be trained online, using advantage value estimates rather than Q-value estimates (where an advantage value estimate is an estimate of a difference between the Q-value and a state-value at the current time step).

As previously described, in implementations the environment is a real-world environment and the constraints are constraints on costs incurred by the agent when acting in the real-world to perform the task. The agent may be mechanical agent such as a robot interacting with the environment to accomplish a task or an autonomous or semi-autonomous land or air or water vehicle navigating through the environment.

In general the observations may include, for example, one or more of images, object position data, and sensor data to capture observations as the agent interacts with the environment, for example sensor data from an image, distance, or position sensor or from an actuator. In the case of a robot or other mechanical agent or vehicle the observations may similarly include one or more of the position, linear or angular velocity, force, torque or acceleration, and global or relative pose of one or more parts of the agent. The observations may be defined in 1, 2 or 3 dimensions, and may be absolute and/or relative observations. For example in the case of a robot the observations may include data characterizing the current state of the robot, e.g., one or more of: joint position, joint velocity, joint force, torque or acceleration, and global or relative pose of a part of the robot such as an arm and/or of an item held by the robot. The observations may also include, for example, sensed electronic signals such as motor current or a temperature signal; and/or image or video data for example from a camera or a LIDAR sensor, e.g., data from sensors of the agent or data from sensors that are located separately from the agent in the environment.

The actions may comprise control inputs to control a physical behavior of the mechanical agent, e.g., robot, e.g., torques for the joints of the robot or higher-level control commands; or to control the autonomous or semi-autonomous land or air or sea vehicle, e.g., torques to the control surface or other control elements of the vehicle or higher-level control commands. In other words, the actions can include for example, position, velocity, or force/torque/acceleration data for one or more joints of a robot or parts of another mechanical agent. Action data may include data for these actions and/or electronic control data such as motor control data, or more generally data for controlling one or more electronic devices within the environment the control of which has an effect on the observed state of the environment. For example in the case of an autonomous or semi-autonomous land or air or sea vehicle the actions may include actions to control navigation, e.g., steering, and movement, e.g., braking and/or acceleration of the vehicle.

In such applications the rewards and/or costs may include, or be defined based upon the following: One or more rewards or costs for approaching or achieving one or more target locations, one or more target poses, or one or more other target configurations, e.g., to reward a robot arm for reaching a position or pose and/or for constraining movement of a robot arm. A reward or cost may also be associated with collision of a part of a mechanical agent with an entity such as an object or wall or barrier. One or more rewards or costs dependent upon any of the previously mentioned observations e.g. robot or vehicle positions or poses. For example in the case of a robot a reward or cost may depend on a joint orientation (angle) or speed/velocity, e.g., to limit motion speed, an end-effector position, a center-of-mass position, or the positions and/or orientations of groups of body parts. A reward or cost may also or instead be associated with force applied by an actuator or end-effector, e.g., dependent upon a threshold or maximum applied force when interacting with an object; or with a torque applied by a part of a mechanical agent.

In another example a reward or cost may also or instead be dependent upon energy or power usage, excessive motion speed, one or more positions of one or more robot body parts, e.g., for constraining movement, and so forth. A corresponding constraint may be defined for each of these costs. Multiple constraints may be used to define an operational envelope for the agent.

Where the agent or robot comprises an autonomous or semi-autonomous moving vehicle similar rewards and costs may apply. Also or instead such an agent or robot may have one or more rewards or costs relating to physical movement of the vehicle, e.g., dependent upon energy or power use whilst moving, e.g., to define a maximum or average energy use, speed of movement, a route taken when moving e.g. to penalize a longer route over a shorter route between two points, as measured by distance or time. Such an agent or robot may be used to perform a task such as warehouse, logistics, or factory automation, e.g., collecting, placing, or moving stored goods or goods or parts of goods during their manufacture; or the task performed may comprise a package delivery control task. Thus one or more of the rewards or costs may relate these tasks, the actions may include actions relating to steering or other direction control actions, and the observations may include observations of the positions or motions of other agents, e.g., other vehicles or robots.

In the above described applications the same observations, actions, rewards and costs may be applied to a simulation of the agent in a simulation of the real-world environment. Once the system has been trained in the simulation, e.g., once the neural networks of the system/method have been trained, the system/method can be used to control the real-world agent in the real-world environment. That is control signals generated by the system/method may be used to control the real-world agent to perform a task in the real-world environment in response to observations from the real-world environment. Optionally the system/method may continue training in the real-world environment.

Thus in some cases the system is trained at least partly using a simulation of a mechanical agent in a simulation of a real-world environment, and is afterwards deployed to control the mechanical agent in the real-world environment that was the subject of the simulation. In such cases the observations in the simulated environment may be described as relating to the real-world environment, and a selected action in the simulated environment as relating to an action to be performed by a mechanical agent in the real-world environment.

In some applications the agent may be a static or mobile software agent, i.e., a computer programs configured to operate autonomously and/or with other software agents or people to perform a task. For example the environment may be a circuit or an integrated circuit routing environment and the agent may be configured to perform a routing task for routing interconnection lines of a circuit or of an integrated circuit, e.g., an ASIC. The reward(s) and/or cost(s) may then be dependent on one or more routing metrics such as interconnect length, resistance, capacitance, impedance, loss, speed or propagation delay; and/or physical line parameters such as width, thickness or geometry, and design rules. The reward(s) and/or cost(s) may also or instead include one or more reward(s) and/or cost(s) relating to a global property of the routed circuitry, e.g., component density, operating speed, power consumption, material usage, a cooling requirement, level of electromagnetic emissions, and so forth. One or more constraints may be defined in relation to the one or more costs. The observations may be, e.g., observations of component positions and interconnections; the actions may comprise component placing actions, e.g., to define a component position or orientation and/or interconnect routing actions, e.g., interconnect selection and/or placement actions.

In some applications the agent may be an electronic agent and the observations may include data from one or more sensors monitoring part of a plant or service facility such as current, voltage, power, temperature and other sensors and/or electronic signals representing the functioning of electronic and/or mechanical items of equipment. The agent may control actions in a real-world environment including items of equipment, for example in a facility such as: a data center, server farm, or grid mains power or water distribution system, or in a manufacturing plant or service facility. The observations may then relate to operation of the plant or facility, e.g., they may include observations of power or water usage by equipment, or observations of power generation or distribution control, or observations of usage of a resource or of waste production. The actions may include actions controlling or imposing operating conditions on items of equipment of the plant/facility, and/or actions that result in changes to settings in the operation of the plant/facility, e.g., to adjust or turn on/off components of the plant/facility. The reward(s) and/or cost(s), to be maximized and constrained, may include one or more of: a measure of efficiency, e.g., resource usage; a measure of the environmental impact of operations in the environment, e.g., waste output; electrical or other power or energy consumption; heating/cooling requirements; resource use in the facility, e.g., water use; a temperature of the facility or of an item of equipment in the facility; a count of characteristics of items within the facility.

In some applications the environment may be a data packet communications network environment, and the agent may comprise a router to route packets of data over the communications network. The actions may comprise data packet routing actions and the observations may comprise, e.g., observations of a routing table which includes routing metrics such as a metric of routing path length, bandwidth, load, hop count, path cost, delay, maximum transmission unit (MTU), and reliability. The reward(s) and cost(s)/constraint(s) may be defined in relation to one or more of the routing metrics, i.e., to maximize or constrain one or more of the routing metrics.

In some other applications the agent is a software agent which manages distribution of tasks across computing resources, e.g., on a mobile device and/or in a data center. In these implementations, the observations may include observations of computing resources such as compute and/or memory capacity, or Internet-accessible resources; and the actions may include assigning tasks to particular computing resources. The reward(s) and cost(s)/constraint(s) may be to maximize or constrain one or more of: utilization of computing resources, electrical power, bandwidth, and computation speed.

In some other applications the environment may be an in silico drug design environment, e.g., a molecular docking environment, and the agent may be a computer system for determining elements or a chemical structure of the drug. The drug may be a small molecule or biologic drug. An observation may be an observation of a simulated combination of the drug and a target of the drug. An action may be an action to modify the relative position, pose or conformation of the drug and drug target (or this may be performed automatically) and/or an action to modify a chemical composition of the drug and/or to select a candidate drug from a library of candidates. One or more rewards or costs may be defined based on one or more of: a measure of an interaction between the drug and the drug target, e.g., of a fit or binding between the drug and the drug target; an estimated potency of the drug; an estimated selectivity of the drug; an estimated toxicity of the drug; an estimated pharmacokinetic characteristic of the drug; an estimated bioavailability of the drug; an estimated ease of synthesis of the drug; and one or more fundamental chemical properties of the drug. A measure of interaction between the drug and drug target may depend on e.g. a protein-ligand bonding, van der Waal interactions, electrostatic interactions, and/or a contact surface region or energy; it may comprise, e.g., a docking score. A cost may have a corresponding constraint. Following identification of elements or a chemical structure of a drug in simulation, the method may further comprise making the drug. The drug may be made partly or completely by an automatic chemical synthesis system.

In some other applications the environment is an Internet or mobile communications environment and the agent is a software agent which manages a personalized recommendation for a user. The observations may comprise previous actions taken by the user, e.g., features characterizing these; the actions may include actions recommending items such as content items to a user. The reward(s) and cost(s)/constraint(s) may be to maximize or constrain one or more of: an estimated likelihood that the user will respond favorably to being recommended the (content) item, a suitability unsuitability of one or more recommended items, a cost of the recommended item(s), and a number of recommendations received by the user, optionally within a time span.

Optionally, in any of the above implementations, the observation at any given time step can include data from a previous time step that can be beneficial in characterizing the environment, e.g., the action performed at the previous time step.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

Further aspects of the invention are defined in the following clauses:

1. A computer implemented method of controlling an agent to perform one or more tasks while interacting with an environment, each task having at least one respective reward associated with performance of the task, and wherein performing the one or more tasks is subject to one or more constraints on one or more respective costs, the method comprising:

maintaining an action selection policy neural network, having a plurality of action selection policy neural network parameters, for selecting an action in response to an observation from the environment, wherein the action selection policy neural network is conditioned on a preference vector input comprising a vector of preference settings each defining a relative priority of one of the rewards or costs with respect to the others;
maintaining a preference neural network, having a plurality of preference neural network parameters, defining a preference distribution for the vector of preference settings;
selecting, at each of a plurality of time steps, an action to be performed by the agent in the environment by receiving an observation from the environment and a vector of preference settings sampled from the preference distribution defined by the preference neural network, providing the vector of preference settings and data from the observation to the action selection policy neural network, using an output of the action selection policy neural network to select the action to be performed by the agent, and receiving one or more rewards and one or more costs;
fixing the preference neural network parameters and adjusting the action selection policy neural network parameters to jointly optimize a set of target objectives, wherein each of the one or more rewards and each of the one or more costs has a respective one of the target objectives; and
fixing the action selection policy neural network parameters and adjusting the preference neural network parameters to optimize a constraint objective dependent on whether each of the one or more constraints is satisfied by the one or more respective costs.

2. A method as clauseed in clause 1 wherein the action selection policy neural network parameters are adjusted to jointly optimize a set of target objectives towards the Pareto front, and wherein the set of objectives is optimized towards a region of the Pareto front in which the constraints are satisfied.

3. A method as clauseed in clause 1 or 2 comprising determining the constraint objective by determining, for each of the one or more constraints, a value of a respective constraint fitting function, dependent on the vector of preference settings, that evaluates whether the respective constraint is satisfied by the respective cost.

4. A method as clauseed in clause 1, 2 or 3 further comprising

maintaining, for each target objective, a respective Q-value neural network having a plurality of Q-value neural network parameters and a Q-value output for defining an action-value score dependent upon an action, an observation, and a vector of preference settings;

determining a value of a constraint fitting function for a constraint from the Q-value output of the Q-value neural network for the target objective of the cost constrained by the constraint, averaged over observations and actions; and

using the constraint fitting function for each constraint to determining the constraint objective.

5. A method as clauseed in clause 4 wherein the value of the constraint fitting function is dependent upon a difference between the Q-value output of the Q-value neural network for the target objective of the cost constrained by the constraint, and a constraint value for the constraint.

6. A method as clauseed in any of clauses 1-5, comprising

sampling a vector of preference settings from the preference distribution defined by the preference neural network whilst the preference neural network parameters are fixed; and

adjusting the action selection policy neural network parameters to jointly optimize the set of target objectives according to relative preferences amongst the target objectives defined by the relative priorities of the rewards or constraints associated with the target objectives which are defined by the sampled vector of preference settings.

7. A method as clauseed in any of clauses 1-6, further comprising

maintaining, for each target objective, a respective Q-value neural network having a plurality of Q-value neural network parameters and a Q-value output for defining an action-value score dependent upon an action, an observation, and a vector of preference settings; and

using each Q-value neural network to optimize the respective target objective for each of the one or more rewards and of the one or more costs.

8. A method as clauseed in clause 7 wherein adjusting the action selection policy neural network parameters to jointly optimize the set of target objectives comprises:

sampling a vector of preference settings from the preference distribution defined by the preference neural network whilst the preference neural network parameters are fixed;

providing the sampled vector of preference settings to each Q-value neural network;

adjusting the Q-value neural network parameters of each Q-value neural network to optimize a Q-learning objective dependent upon a measure of a difference between the Q-value output and a respective Q-value target, wherein the respective Q-value target is determined in accordance with an action selection policy defined by a current value of the action selection policy neural network parameters; and

adjusting the action selection policy neural network parameters using the Q-value output of each Q-value neural network after the Q-value neural network parameters have been adjusted.

9. A method as clauseed in clause 8 wherein adjusting the action selection policy neural network parameters using Q-value outputs from the Q-value neural networks comprises:

determining, for each target objective, an improved action selection policy wherein the improved action selection policy is determined by scaling the output of the action selection policy neural network by a policy improvement factor for the target objective dependent upon the Q-value output from the Q-value neural network for the target objective; and

adjusting the action selection policy neural network parameters to optimize a combined policy improvement objective dependent upon a measure of a difference between a current action selection policy defined by current parameters of the action selection policy neural network and the improved action policy for each target objective.

10. A method as clauseed in clause 9 where each of the current action selection policy and the improved action policy for each target objective is defined by a distribution over actions dependent upon the observations and upon the preference settings, and wherein the measure of a difference comprises a measure of a difference between the distributions.

11. A method as clauseed in clause 9 or 10 wherein the policy improvement factor for the target objective is dependent upon a temperature parameter, the method further comprising

obtaining the temperature parameter by optimizing a temperature objective function dependent upon, for each target objective, the Q-value output from the Q-value neural network for the target objective averaged over preference settings sampled from the preference distribution, observations received from the environment, and actions for the observations sampled from the current action selection policy.

12. A method as clauseed in any preceding clause further comprising initializing the preference distribution such that a sampled vector of preference settings sampled from the preference distribution is likely to prioritize costs over rewards.

13. A method as clauseed in any preceding clause wherein the environment is a real-world environment and the constraints are constraints on costs incurred by the agent when acting in the real-world to perform the task.

14. A system comprising one or more computers and one or more storage devices storing instructions that are operable, when executed by the one or more computers, to cause the one or more computers to perform the operations of the respective method of any one of clauses 1-13.

15. A computer storage medium encoded with instructions that, when executed by one or more computers, cause the one or more computers to perform the operations of the respective method of any one of clauses 1-13.

What is claimed is:

## Claims

1. A computer implemented method of controlling an agent (102) to perform one or more tasks while interacting with an environment (104), each task having at least one respective reward associated with performance of the task, and wherein performing the one or more tasks is subject to one or more constraints on one or more respective costs, the method comprising:

maintaining an action selection policy neural network (120), having a plurality of action selection policy neural network parameters, for selecting an action in response to an observation from the environment, wherein the observation comprises an image, wherein the action selection policy neural network is conditioned on a preference vector input comprising a vector of preference settings (132) each defining a relative priority of one of the rewards or costs with respect to the others;

maintaining a preference neural network (130), having a plurality of preference neural network parameters, and an output defining a preference distribution for the vector of preference settings;

selecting, at each of a plurality of time steps, an action to be performed by the agent in the environment by receiving an observation (106) from the environment, wherein the observation comprises an image, and a vector of preference settings sampled from the preference distribution defined by the preference neural network, providing the vector of preference settings and data from the observation to the action selection policy neural network, using an output of the action selection policy neural network to select the action to be performed by the agent, and receiving one or more rewards (108) and one or more costs (110);

fixing the preference neural network parameters and adjusting the action selection policy neural network parameters to jointly optimize a set of target objectives, wherein each of the one or more rewards and each of the one or more costs has a respective one of the target objectives; and

fixing the action selection policy neural network parameters and adjusting the preference neural network parameters to optimize a constraint objective dependent on whether each of the one or more constraints is satisfied by the one or more respective costs.

2. A method as claimed in claim 1 wherein the action selection policy neural network parameters are adjusted to jointly optimize a set of target objectives towards the Pareto front, and wherein the set of objectives is optimized towards a region of the Pareto front in which the constraints are satisfied.

3.  A method as claimed in claim 1 or 2 comprising determining the constraint objective by determining, for each of the one or more constraints, a value of a respective constraint fitting function, dependent on the vector of preference settings, that evaluates whether the respective constraint is satisfied by the respective cost.

4.  A method as claimed in claim 1, 2 or 3 further comprising

    maintaining, for each target objective, a respective Q-value neural network having a plurality of Q-value neural network parameters and a Q-value output for defining an action-value score dependent upon an action, an observation, and a vector of preference settings;
    determining a value of a constraint fitting function for a constraint from the Q-value output of the Q-value neural network for the target objective of the cost constrained by the constraint, averaged over observations and actions; and
    using the constraint fitting function for each constraint to determining the constraint objective.

5.  A method as claimed in claim 4 wherein the value of the constraint fitting function is dependent upon a difference between the Q-value output of the Q-value neural network for the target objective of the cost constrained by the constraint, and a constraint value for the constraint.

6.  A method as claimed in any of claims 1-5, comprising

    sampling a vector of preference settings from the preference distribution defined by the preference neural network whilst the preference neural network parameters are fixed; and
    adjusting the action selection policy neural network parameters to jointly optimize the set of target objectives according to relative preferences amongst the target objectives defined by the relative priorities of the rewards or constraints associated with the target objectives which are defined by the sampled vector of preference settings.

7.  A method as claimed in any of claims 1-6, further comprising

    maintaining, for each target objective, a respective Q-value neural network having a plurality of Q-value neural network parameters and a Q-value output for defining an action-value score dependent upon an action, an observation, and a vector of preference settings; and
    using each Q-value neural network to optimize the respective target objective for each of the one or more rewards and of the one or more costs.

8.  A method as claimed in claim 7 wherein adjusting the action selection policy neural network parameters to jointly optimize the set of target objectives comprises:

    sampling a vector of preference settings from the preference distribution defined by the preference neural network whilst the preference neural network parameters are fixed;
    providing the sampled vector of preference settings to each Q-value neural network;
    adjusting the Q-value neural network parameters of each Q-value neural network to optimize a Q-learning objective dependent upon a measure of a difference between the Q-value output and a respective Q-value target, wherein the respective Q-value target is determined in accordance with an action selection policy defined by a current value of the action selection policy neural network parameters; and
    adjusting the action selection policy neural network parameters using the Q-value output of each Q-value neural network after the Q-value neural network parameters have been adjusted.

9.  A method as claimed in claim 8 wherein adjusting the action selection policy neural network parameters using Q-value outputs from the Q-value neural networks comprises:

    determining, for each target objective, an improved action selection policy wherein the improved action selection policy is determined by scaling the output of the action selection policy neural network by a policy improvement factor for the target objective dependent upon the Q-value output from the Q-value neural network for the target objective; and
    adjusting the action selection policy neural network parameters to optimize a combined policy improvement objective dependent upon a measure of a difference between a current action selection policy defined by current parameters of the action selection policy neural network and the improved action policy for each target objective.

10. A method as claimed in claim 9 where each of the current action selection policy and the improved action policy for each target objective is defined by a distribution over actions dependent upon the observations and upon the preference settings, and wherein the measure of a difference comprises a measure of a difference between the distributions.

11. A method as claimed in claim 9 or 10 wherein the policy improvement factor for the target objective is dependent upon a temperature parameter, the method further comprising
obtaining the temperature parameter by optimizing a temperature objective function dependent upon, for each target objective, the Q-value output from the Q-value neural network for the target objective averaged over preference settings sampled from the preference distribution, observations received from the environment, and actions for the observations sampled from the current action selection policy.

12. A method as claimed in any preceding claim further comprising initializing the preference distribution such that a sampled vector of preference settings sampled from the preference distribution is more likely than not to prioritize costs over rewards.

13. A method as claimed in any preceding claim, wherein the image is from a camera.

14. A system comprising one or more computers and one or more storage devices storing instructions which, when executed by the one or more computers, cause the one or more computers to perform the operations of the respective method of any one of claims 1-13.

15. A computer storage medium encoded with instructions that, when executed by one or more computers, cause the one or more computers to perform the operations of the respective method of any one of claims 1-13.

ACTION 112

AGENT 102

ENVIRONMENT 104

ACTION SELECTION
SYSTEM 100

OBSERVATION 106

ACTION SELECTION POLICY
NEURAL NETWORK 120

PREFERENCE
SETTINGS 132

PREFERENCE NEURAL
NETWORK 130

REWARD(S) 108

COST(S) 110

TRAINING ENGINE 140

FIG. 1

FIG. 2

300

SAMPLE A VECTOR OF PREFERENCE
SETTINGS

302

RECEIVE AN OBSERVATION OF THE
ENVIRONMENT

304

PROVIDE THE OBSERVATION AND VECTOR OF
PREFERENCE SETTINGS TO THE ACTION
SELECTION POLICY NEURAL NETWORK

306

USE THE OUTPUT OF THE ACTION SELECTION
POLICY NEURAL NETWORK TO SELECT AN
ACTION FOR THE AGENT TO PERFORM

308

OBTAIN REWARD(S) AND COST(S) and
RECEIVE A NEXT OBSERVATION OF THE
ENVIRONMENT

310

STORE EXPERIENCE TUPLE IN THE REPLAY
BUFFER

312

UPDATE THE ACTION SELECTION NEURAL
NETWORK PARAMETERS

314

DETERMINE A VALUE OF THE FITNESS
FUNCTION FOR EACH CONSTRAINT

316

UPDATE THE PREFERENCE NEURAL
NETWORK PARAMETERS USING THE FITNESS
FUNCTION VALUE(S)

FIG. 3

400

SAMPLE A SET OF TRANSITIONS FROM THE
REPLAY BUFFER

402

FOR EACH TRANSITION SAMPLE A VECTOR
OF PREFERENCE SETTINGS FROM THE
CURRENT PREFERENCE DISTRIBUTION

404

TRAIN EACH Q-VALUE NEURAL NETWORK
USING A RESPECTIVE Q-VALUE TARGET
DETERMINED FROM REWARDS/COSTS IN THE
SAMPLED TRANSITIONS

406

USE Q-VALUES TO COMPUTE AN IMPROVED
ACTION DISTRIBUTION FOR EACH TARGET
OBJECTIVE

408

DETERMINE AN IMPROVED ACTION
SELECTION POLICY USING THE IMPROVED
ACTION DISTRIBUTIONS

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Dynamic multi-objective optimisation using deep reinforcement learning: benchmark, algorithm and an application to identify vulnerable zones based on water quality. **HASAN et al.** Engineering Applications of Artificial Intelligence. Pineridge Press, 06 September 2019, vol. 86, 107-135